# EUROPEAN PATENT SPECIFICATION

(11) **EP 2 195 382 B1**
(45) Date of publication and mention of the grant of the patent: **05.09.2012**
(21) Application number: 08802660.4
(22) Date of filing: 22.09.2008
(51) Int. Cl.: C08L 55/02, C08L 51/00

(54) **TRANSPARENT COMPOSITIONS BASED ON HIGH-IMPACT VINYL AROMATIC COPOLYMERS**
TRANSPARENTE ZUSAMMENSETZUNGEN AUF BASIS VON SCHLAGZÄHEN VINYLAROMATISCHEN COPOLYMEREN
COMPOSITIONS TRANSPARENTES À BASE DE COPOLYMÈRES AROMATIQUES VINYLIQUES À HAUTE RÉSISTANCE AU CHOC

(30) Priority: 26.09.2007 IT MI20071854
(43) Date of publication of application: 16.06.2010
(73) Proprietor: versalis S.p.A., 20097 San Donato Milanese (MI) (IT)
(72) Inventor: LONGO, Aldo, I-46100 Mantova (IT); CASALINI, Alessandro, I-46100 Mantova (IT)
(74) Representative: Bottero, Carlo
(86) International application number: PCT/EP2008/008209
(87) International publication number: WO 2009/040127

(56) References cited:
- EP-A- 0 356 249
- EP-A- 0 409 657
- EP-A- 0 832 933
- DE-A1- 2 448 596

## Description

The present invention relates to transparent compositions based on high-impact vinyl aromatic copolymers.

More specifically, the present invention relates to transparent compositions based on high-impact vinyl aromatic copolymers, for example ABS (Acrylonitrile-ButadieneStyrene), and a continuous mass process for the production of these compositions.

In the present description, all the conditions mentioned in the text can be considered as preferred conditions, even when not expressly declared.

As is known, high-impact thermoplastic polymeric materials, such as ABS, are characterized by a continuous matrix in which a reinforcing elastomeric material is dispersed, in the form of discontinuous particles. The high-impact materials are generally opaque. At least two synthesis techniques are known however for obtaining transparent biphasic polymers.

The two amorphous phases (resin and elastomer) are continuous and consist of block polymers with a lamellar or cylindrical structure and the dimensions of the domains of the two phases are lower than 1/20 of the light wave-length (in practice, the light passes through an amorphous material having a homogeneous composition as non-homogeneity does not cause light refraction). This strategy is widely used for styrene-butadiene block copolymers (transparent high-impact PS) produced through anionic synthesis. International patent applications WO 97/36944 and WO 04/72172 also describe the preparation of transparent butadiene-SAN obtained by means of "living" radicalic synthesis, but commercial polymers obtained with these latter methods are not known.

The two amorphous phases (continuous resin phase and dispersed elastomeric phase) have the same refractive index. This is the most widely-used technique in the case of transparent ABS modified with PMMA.

The following document relates to the subject of "high-impact styrene polymers", which also includes transparent polymers:
Echte A., Rubber - Toughened Styrene Polymers in Rubber - Toughened Plastics, Advances in Chemistry Series nr. 222 (1989) Editor Riew K. C., ISBN 0841214883.

As is known, ABS is opaque as the refractive index (RI) of Styrene-Acrylonitrile (SAN) copolymer is 1.58 - 1.56 (depending on the bound acrylonitrile content) and that of polybutadiene rubber about 1.51 and, in order to have transparency, it is necessary to have refractive indexes of the phases equal at the third decimal unit (Δn < 0.005).

A method for obtaining transparency which is described, for example, in the A. Echte document previously cited, is to increase the refractive index of the elastomeric phase by producing the elastomer through copolymerization of butadiene with styrene (Styrene IR = 1.59) in emulsion. In this way, a rubber is produced having an RI = 1.53 - 1.55 by varying the composition of the Styrene-Butadiene (SB) copolymer. Polymethyl methacrylate (PMMA) is grafted on the rubber particles thus obtained, producing a grafted product with a high elastomer content.

The resin phase is then added by mixing in the molten state; said resin consisting of SAN (with bound acrylonitrile content < 22% by weight) and PMMA (IR=1.49) which are easily miscible with each other and form a homogeneous polymeric alloy having a refractive index lower than that of SAN. The overall PMMA content is higher than 40% and therefore the transparent ABS are in fact MABS.

Another known synthesis method, described in the patent US 4,767,833, is to copolymerize styrene and butadiene to obtain rubber particles having a refractive index higher than that of polybutadiene and then graft a styrene-methyl methacrylate polymer, possibly containing acrylonitrile, onto this rubber.

The grafting reaction can be effected in emulsion, suspension or in mass. The acrylic monomer must be present when this synthesis method is adopted, whereas acrylonitrile can be absent. A product is obtained, with good mechanical characteristics, transparent and colourless, but the chemical resistance may be lower than that of ABS.

A process is described in European patent EP 1,417,242 for preparing a transparent ABS product for extruded sheets. This is a Styrene-Butadiene elastomer grafted with styrene - methyl methacrylate - acrylonitrile, with a minimum quantity of bound acrylonitrile of at least 0.5% and the dispersed rubber particles must have an average diameter ranging from 150 to 550 nm. .

EP-A-0832933A1 discloses a blend of an ABS polymerizate and at least a polyester resin having a number-average molecular mass Mm ranging from 800 to 7000.

DE-A-2448596A1 discloses a novel impact resistant ABS resin comprising 1-10 parts by weight of straight chain saturated polyester resin having a number-average molecular weight of from 1000 to 50000.

EP-A-0409657A2 discloses impact modified thermoplastic polymer blends comprising from 10 to 99% wt of a transparent block copolymer; from 0.01 to 1% wt of a rubber in particulate form; and the balance being one or more clear glassy polymers.

EP-A-0356249 discloses a process for producing a rubber modified thermoplastic resin comprising polymerizing 30-100% by weight of an aromatic alkenyl compound and/or an alkyl(meth)acrylate monomer and 70-0% by weight of at least one other monomeric compound copolymerizable therewith, in the presence of a hydrogenated diene copolymer.

The Applicant has now found a new transparent composition based on vinyl aromatic resins reinforced with an elastomer, which represents an alternative to those of the known art and which allows the use of raw materials easily found on the market. This composition is suitable for preparing transparent formed bodies.

An object of the present invention therefore relates to a transparent composition based on high-impact vinyl aromatic copolymers including:
90 - 99% by weight, preferably 93-98%, of a high-impact vinyl aromatic copolymer, comprising a rigid matrix consisting of 50-70% by weight, preferably from 55 to 65%, at least one bound vinyl aromatic monomer, from 20 to 40% by weight, preferably from 25 to 38%, of bound ethylenically unsaturated nitrile and from 0 to 20% by weight, for example from 2 to 10%, of at least one bound ester of (meth)acrylic acid, a matrix in which from 1 to 25% by weight, with respect to the total weight of the resin, of an elastomeric phase is homogeneously dispersed said elastomeric phase homogeneously dispersed in the polymeric matrix of component (a) consisting of a styrene-butadiene random or block copolymer with a butadiene content ranging from 40 to 55% weight;
1 - 10% by weight, preferably 2 - 7% of a lubricating oil consisting of a polyester of adipic acid with an (iso)alkyl diol wherein the (iso)alkyl group has from 2 to 6 carbon atoms, having a viscosity at 25°C of between 2 and 20 Pa·sec.

According to the present invention, the term "vinyl aromatic copolymer", as used in the present description and claims, essentially refers to a product obtained from monomers having the following general formula: 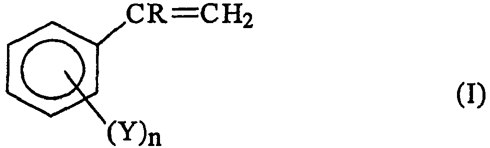 wherein R is hydrogen or a methyl group, n is zero or an integer ranging from 1 to 5 and Y is a halogen such as chlorine or bromine, or an alkyl or alkoxyl radical with from 1 to 4 carbon atoms.

Examples of vinyl aromatic monomers having the general formula defined as above, are: styrene, α-methylstyrene, methylstyrene, ethylstyrene, butylstyrene, dimethylstyrene, mono-, di-, tri-, tetra- and penta-methylstyrene, etc.. Styrene and/or α-methylstyrene are the preferred vinyl aromatic monomers.

Any monomer deriving from the ester of (meth)acrylic acid can be used for preparing the vinyl aromatic copolymer (a) even if methacrylate and methyl methacrylate; ethyl acrylate and ethyl methacrylate; butyl acrylate and butyl methacrylate; 2-ethyl hexyl acrylate and cyclohexylacrylate are preferred. Butyl acrylate and butyl methacrylate are particularly preferred acrylic monomers.

The ethylenically unsaturated nitrile according to the present invention is acrylonitrile or methacrylonitrile. Acrylonitrile is the preferred monomer.

The second component of the transparent composition based on vinyl aromatic copolymers object of the present invention preferably consists of the polyester of adipic acid with 1,3-butandiol. This product can be prepared easily using conventional transesterification/polycondensation technologies. The preferred polyester of adipic acid with 1,3-butandiol according to the present invention is that having a viscosity at 25°C ranging from 2 to 20 Pa·sec.

The transparent composition based on high-impact vinyl aromatic copolymers, object of the present invention, can be obtained by mixing the two components (a) and (b) in the molten state followed by a cooling and granulation phase. In particular, the transparent composition can be obtained by mass/solution polymerization of the monomers forming component (a) and, after treating the mass in the molten state in a devolatizer at a temperature of 200-250°C, to eliminate volatile components (solvent and non-reacted monomers) and oligomers, it is mixed, in a dynamic or static mixer, with the polyester. At the end of mixing, the composition is cooled, granulated and stored. Alternatively, component (a), already available as solid granules, is melted and mixed with the polyester (b) in a static or dynamic mixer.

The preparation of component (a) is carried out in mass/solution. According to this production technique, reactive monomers are diluted in a solvent base, for example an aromatic hydrocarbon, such as toluene, ethylbenzene, xylenes, in such quantities as to obtain a final product having the composition previously indicated. The elastomeric component essentially consisting of one or more types of styrene-butadiene rubber, having a different bound styrene content, is dissolved in the solvent base comprising the monomers. The dissolution is effected in a stirred, closed container at a temperature lower than 100°C, to avoid the triggering of the polymerization thermally, and at atmospheric pressure or slightly higher. In this phase, the temperature is preferably maintained at between 35 and 95°C.

New diblock linear copolymers of the S-B type, wherein S represents a polystyrene block having an average molecular weight Mw ranging from 5,000 to 80,000, whereas B represents a polybutadiene block having an average molecular weight Mw ranging from 2,000 to 250,000, are examples of styrene-butadiene elastomers. The quantity of block B in these elastomers preferably ranges from 40 to 55% by weight, if a single elastomer is used.

When a blend of two elastomers is used, these must be miscible with each other, in the sense that they must form a homogeneous single phase. The quantity of block B ranges from 50 to 80% by weight with respect to the total S-B rubber content, for the elastomer with a high bound butadiene content, and from 20 to 35% by weight with respect to the total S-B rubber content, for the elastomer with a low bound butadiene content. In this case, the preferred products are styrene-butadiene block copolymers having a bound butadiene content of 60% by weight and a viscosity in solution measured at 23°C in a solution of 5% by weight of styrene, ranging from 35 to 50m Pa·sec (35 to 50 cPs) and styrene-butadiene block copolymers having a bound butadiene content of 25-26% by weight and a viscosity in solution, measured at 23°C in a solution of 5% by weight of styrene, ranging from 5 to 25m Pa·sec (5 to 25 cPs).

Other examples of elastomers which can be used in the process object of the present invention, are those mentioned in European patent 606,931.

A catalytic polymerization system is possibly added to the solution thus prepared. If present, this catalytic system is used in a quantity of 0.01 to 0.5% by weight with respect to the total and consists of one or more free radical initiators. The free radical initiators are selected, in particular, from those having an activation temperature higher than 50°C. Typical examples of polymerization initiators are azo-derivatives such as 4,4'-bis-(diisobutyronitrile), 4,4'-bis-(4-cyanopentanoic acid), 2,2'-azobis(2 amidinopropane) dihydrochloride, or peroxides, hydroperoxides, percarbonates and peresters. In general, peroxides are the preferred free radical initiators, selected from t-butyl isopropyl monoperoxycarbonate, t-butyl 2-ethylhexyl monoperoxycarbonate, dicumyl peroxide, di-t-butyl peroxide, 1,1-di(t-butylperoxy) cyclohexane, 1,1-di(t-butyl peroxy)-3,3,5-trimethyl cyclohexane (di-ter-butyl peroxy cyclohexane), t-butylperoxyacecate, cumyl t-butyl peroxide, t-butyl peroxybenzoate and t-butyl peroxy-2-etylhaxanoate.

Other additives which can be added to the polymerization mixture, are those traditionally known and used in the preparation of transparent, high-impact, vinyl aromatic copolymers. For example, the polymerization mixture can include a molecular weight regulator such as a mercaptan selected from n-octylmercaptan, n-dodecylmercaptan, t-dodecylmercaptan, mercaptoethanol, etc.. Other additives are selected, for example, from antioxidants, UV stabilizers, antistatic products, etc..

At the end of the preparation of the reaction mixture, the latter is fed to the polymerization section, preferably consisting of one or more tubular reactors (PFR) arranged in series. Tubular reactors are apparatuses which are known in literature and to experts in the field, and are described, for example, in "Chemical reaction engineering" second edition, John Whiley & Sons, 1972, pages 97-123.

The polymerization is carried out until a solid content equal to 50-80% by weight is obtained. The molten reaction mass is then discharged from the polymerization section and sent to a polymer recovery section which substantially comprises a heat exchanger, to bring the reaction mass to a temperature equal to or higher than 200-220°C, a devolatization unit for the recovery of the solvent together with the non-reacted monomers, recycled to the mixing section, and oligomers and, possibly, a granulator. More specific details on the polymerization conditions can be found in European patent EP 400,479.

At the end of the preparation of the transparent polymeric composition object of the present invention, a product is obtained in which the difference in the refractive index between the rigid matrix and the elastomer is lower than 0.005.

Some illustrative and non-limiting examples are provided for a better understanding of the present invention and for its embodiment.

### Example 1

17.46 kg of a block copolymer SB Finaclear 520 (25.9% w/w Bu) and 17.46 kg of an SB block copolymer BUNA BL 6533TC (60% w/w Bu) are dissolved in 148.74 kg of styrene, in a stirred reactor, under nitrogen, at 80°C for 4 hours. The average composition of the SB blend is: 42.5% of bound butadiene and 57.5% of bound styrene. After cooling to 40°C, 66.34 kg of ethylbenzene, 70 g of cyclohexane di-terbutylperoxide at 50% in mineral oil, 1.12 kg of ter-dodecyl mercaptan are added.

The solution thus prepared is transferred to an intermediate storage container under nitrogen, and from there is fed in continuous, with a flow-rate of 21.5 kg/hr, into a stirred reactor under nitrogen, at 90°C. Acrylonitrile is also fed in continuous to the same stirred container, with a flow-rate of 8.5 kg/hr.

The reaction mixture thus obtained is fed in continuous to two PFR reactors in series, having a reaction volume of 100 litres each, each equipped with three thermostat-regulation zones, with the following thermal profile:
115°C, 120°C, 125°C, 140°C, 147°C, 155°C where each temperature is representative of the average temperature of the mixture in a certain area. The reaction mixture leaving the second PFR, containing 70-73% of polymer, enters a vacuum container (20 mbar residual), passing through an exchanger with thermostat-regulated oil at 240°C, where the polymer is separated from the solvents and non-reacted monomers. The polymer leaves the bottom of the vacuum container and is granulated. A polymer having the following composition is obtained:

| Components | weight % |
|---|---|
| Styrene | 66.5 |
| Acrylonitrile | 27.5 |
| Butadiene | 6.0 |

Total volatile products equal to 0.0006 by gaschromatography.

The granule obtained is extruded in an extruder and fed in line with 3.3 phr of liquid poly(1,3-butandiol) adipate having a viscosity of about 2,500 mPa·s at 25°C. The final granule is injection moulded and shows an optimum transparency and the properties indicated in the following table.

### Example 2.

15.71 kg of an SB block copolymer Finaclear 520 (25.9% w/w Bu) and 19.21 kg of a block copolymer SB BUNA BL 6533TC (60% w/w Bu) are dissolved in 135.08 kg of styrene, in a stirred reactor, under nitrogen, at 80°C for 4 hours. The average composition of the SB blend is: 44.0% butadiene and 56.0% styrene. After cooling to 40°C, 60.0 kg of ethylbenzene, 20.2 kg of n-butyl acrylate, 70 g of di-ter-butyl peroxide cyclohexane at 50% in mineral oil, 0.92 kg of ter-dodecyl mercaptan are added.

The solution thus prepared is transferred to an intermediate storage container under nitrogen, and from there is fed in continuous, with a flow-rate of 23.0 kg/hr, into a stirred reactor under nitrogen, at 90°C. Acrylonitrile is also fed in continuous to the same stirred container, with a flow-rate of 7.0 kg/hr.

The reaction mixture thus obtained is fed in continuous to two PFR reactors in series, each having a reaction volume of 100 litres, each equipped with three thermostat-regulation zones, with the following thermal profile:
113°C, 118°C, 123°C, 138°C, 145°C, 153°C where each temperature is representative of the average temperature of the mixture in a certain area. The reaction mixture leaving the second PFR, containing 69-72% of polymer, enters a vacuum container (20 mbar residual) passing through an exchanger with thermostat-regulation oil at 240°C, where the polymer is separated from the solvents and non-reacted monomers. The polymer leaves the bottom of the vacuum container and is granulated. A polymer having the following composition is obtained:

| Components | weight % |
|---|---|
| Styrene | 67.1 |
| Acrylonitrile | 22.0 |
| n-butyl acrylate | 4.2 |
| Butadiene | 6.7 |

Total volatile products equal to 0.00065 by gaschromatography.

The granule obtained is extruded in an extruder and fed in line with 4.3 phr of liquid poly(1.3-butandiol) adipate having a viscosity of about 2,500 mPa·s at 25°C.

The granule obtained after the addition of poly(1,3 butandiol) adipate as described in the Example, is injection moulded and shows an optimum transparency and the properties indicated in the following table:

**Table**

| Properties | Measurement unit | Example 1 | Example 2 |
|---|---|---|---|
| Melt Flow Rate 220°C/10kg | g/10' | 21.0 | 23.0 |
| Tensile ISO 527 | | | |
| Stress at yield | MPa | 58.0 | 50.0 |
| Strain at yield | % | 3.0 | 3.5 |
| Elastic modulus | MPa | 3100 | 2950 |
| Flexural strength ISO 178 | | | |
| Stress at 3.5% | MPa | 98.5 | 92.0 |
| Elastic modulus | MPa | 3200 | 3050 |
| IZOD impact strength, notched ISO 180/1A | kJ/m² | 4.5 | 5.0 |
| VICAT ISO 306 B50 | °C | 94.0 | 88.0 |
| Transmittance* | % | 90.7 | 91.0 |
| Haze* | % | 1.5 | 1.2 |

| | | | |
|---|---|---|---|
| (*) ASTM D1003-00 "Standards Test Method for Haze and Luminous Transmittance of Transparent Plastic" | | | |

## Claims

1. Transparent compositions based on high-impact vinyl aromatic copolymers comprising:
90 - 99% by weight of a high-impact vinyl aromatic copolymer comprising a rigid matrix consisting of 50 to 70% by weight of at least one bound vinyl aromatic monomer, from 20 to 40% by weight of bound ethylenically unsaturated nitrile and from 0 to 20% by weight of at least one bound ester of (meth)acrylic acid, a matrix in which from 1 to 25% by weight, with respect to the total weight of the resin, of an elastomeric phase is homogeneously dispersed, said elastomeric phase homogeneously dispersed in the polymeric matrix of component (a) consisting of a styrene-butadiene random or block copolymer with a butadiene content ranging from 40 to 55% by weight;
1 - 10% by weight of a lubricating oil consisting of a polyester of adipic acid with an (iso)alkyl diol, wherein the (iso)alkyl group has from 2 to 6 carbon atoms, with a viscosity at 25°C ranging from 2 to 20 Pa·sec.

2. Compositions according to claim 1, comprising:
93 - 98% by weight of a high-impact vinyl aromatic copolymer comprising a rigid matrix consisting of 55 to 65% by weight of at least one bound vinyl aromatic monomer, from 25 to 38% by weight of bound ethylenically unsaturated nitrile and from 2 to 10% by weight of at least one bound ester of (meth)acrylic acid, a matrix in which from 1 to 25% by weight, with respect to the total weight of the resin, of an elastomeric phase is homogeneously dispersed;
2 - 7% by weight of a lubricating oil consisting of a polyester of adipic acid with an (iso)alkyl diol, wherein the (iso)alkyl group has from 2 to 6 carbon atoms, with a viscosity at 25°C ranging from 2 to 20 Pa·sec.

3. The compositions according to claim 1 or 2, wherein the vinyl aromatic monomer of component (a) is styrene and/or α-methyl styrene.

4. The compositions according to claim 1, 2 or 3, wherein the acrylic monomer of component (a) is selected from butyl acrylate and butyl methacrylate.

5. The compositions according to any of the previous claims, wherein the ethylenically unsaturated nitrile of component (a) is acrylonitrile.

6. The compositions according to any of the previous claims, wherein the polyester of adipic acid with an (iso)alkyl diol of component (b) is the polyester of adipic acid with 1,3-butanediol having a viscosity at 20°C ranging from 2 to 20 Pa·sec.

7. The compositions according to any of the previous claims, wherein the difference in the refractive index between the rigid matrix and elastomer is lower than 0.005.

8. A process for the preparation of transparent polymeric compositions according to any of the claims from 1 to 7, which comprises the mixing of the two components (a) and (b) in the molten state and subsequent cooling and granulation.

9. Use of the polymeric compositions according to any of the previous claims for preparing transparent formed bodies.

## Patentansprüche

1. Transparente Zusammensetzungen auf Basis von schlagzähen vinylaromatischen Copolymeren umfassend:
90-99 Gew.-% eines schlagzähen vinylaromatischen Copolymers umfassend eine starre Matrix bestehend aus 50 bis 70 Gew.-% von mindestens einem gebundenen vinylaromatischen Monomer von 20 bis 40 Gew.-% gebundenem, ethylenischungesättigtem Nitril und von 0 bis 20 Gew.-% von mindestens einem gebundenen Ester von (Meth)acrylsäure, eine Matrix in die von 1 bis 25 Gew.-% bezogen auf das Gesamtgewicht des Harzes, von einer elastomeren Phase homogen dispergiert ist, die elastomere Phase homogen in der polymeren Matrix des Bestandteils (a) dispergiert, die aus einem Styrol-Butadien statistischen oder Block-Copolymer mit einem Butadiengehalt reichend von 40 bis 55 Gew.-% besteht;
1-10 Gew.-% eines Schmieröls das aus einem Polyester von Adipinsäure mit einem Iso(alkyldiol) besteht, wobei die Isoalkylgruppe von 2 bis 6 Kohlenstoffatome aufweist, mit einer Viskosität von 25°C reichend von 2 bis 20 Pa·Sek.

2. Zusammensetzungen nach Anspruch 1, umfassend:
93-98 Gew.-% eines schlagzähen vinylaromatischen Copolymers, umfassend eine starre Matrix bestehend aus 55 bis 65 Gew.-% von mindestens einem gebundenen vinylaromatischen Monomer, von 25 bis 38 Gew.-% gebundenem ethylenischungesättigtem Nitril und von 2 bis 10 Gew.-% von mindestens einem gebundenen Ester von (Meth)acrylsäure, eine Matrix in die von 1 bis 25 Gew.-%, bezogen auf das Gesamtgewicht des Harzes, von einer elastomeren Phase homogen dispergiert ist;
2-7 Gew.-% eines Schmieröls bestehend aus einem Polyester von Adipinsäure mit einem (Iso)alkyldiol, wobei die Isoalkylgruppe von 2 bis 6 Kohlenstoffatome aufweist, mit einer Viskosität von 25°C reichend von 2 bis 20 Pa·Sek.

3. Zusammensetzungen nach Anspruch 1 oder 2, wobei das vinylaromatische Monomer von Bestandteil (a) Styrol und/oder α-Methylstyrol ist.

4. Zusammensetzungen nach Anspruch 1, 2 oder 3, wobei das acrylische Monomer von Bestandteil (a) ausgewählt ist aus Butylacrylat und Butylmethacrylat.

5. Zusammensetzungen nach einem der vorhergehenden Ansprüche, wobei das ethylenisch-ungesättigte Nitril von Bestandteil (a) Acrylnitril ist.

6. Zusammensetzungen nach einem der vorhergehenden Ansprüche, wobei das Polyester von Adipinsäure mit einem Isoalkyldiol von Bestandteil (b) das Polyester von Adipinsäure mit 1,3-Butandiol mit einer Viskosität bei 20°C reichend von 2 bis 20 Pa·Sek ist.

7. Zusammensetzungen nach einem der vorhergehenden Ansprüche, wobei die Differenz des Brechungsindex zwischen der starren Matrix und dem Elastomer weniger als 0,005 beträgt.

8. Verfahren zur Herstellung von transparenten polymeren Zusammensetzungen gemäß einem der Ansprüche von 1 bis 7, das Mischen der zwei Bestandteile (a) und (b) im geschmolzenen Zustand und nachfolgendes Kühlen und Granulierung umfasst.

9. Verwendung der polymeren Zusammensetzungen gemäß einem der vorhergehenden Ansprüche zum Herstellen von transparenten geformten Körpern.

## Revendications

1. Compositions transparentes basées sur des copolymères aromatiques vinyliques à haute résistance au choc comprenant :
90 - 99 % en poids d'un copolymère aromatique vinylique à haute résistance au choc comprenant une matrice rigide consistant en 50 à 70 % en poids d'au moins un monomère aromatique vinylique lié, de 20 à 40 % en poids de nitrile éthyléniquement insaturé lié et de 0 à 20 % en poids d'au moins un ester d'acide (méth)acrylique lié, une matrice dans laquelle de 1 à 25 % en poids, par rapport au poids total de la résine, d'une phase élastomérique est dispersé de manière homogène, ladite phase élastomérique dispersée de manière homogène dans la matrice polymérique du composant (a) consistant en un copolymère statistique ou séquencé styrène-butadiène ayant une teneur en butadiène allant de 40 à 55 % en poids ;
1 - 10 % en poids d'une huile lubrifiante consistant en un polyester d'acide adipique avec un (iso)alkyldiol, où le groupe (iso)alkyle a de 2 à 6 atomes de carbone, avec une viscosité à 25°C allant de 2 à 20 Pa.s.

2. Compositions selon la revendication 1, comprenant :
93 - 98 % en poids d'un copolymère aromatique vinylique à haute résistance au choc comprenant une matrice rigide consistant en 55 à 65 % en poids d'au moins un monomère aromatique vinylique lié, de 25 à 38 % en poids de nitrile éthyléniquement insaturé lié et de 2 à 10 % en poids d'au moins un ester d'acide (méth)acrylique lié, une matrice dans laquelle de 1 à 25 % en poids, par rapport au poids total de la résine, d'une phase élastomérique est dispersé de manière homogène ;
2 - 7 % en poids d'une huile lubrifiante consistant en un polyester d'acide adipique avec un (iso)alkyldiol, où le groupe (iso)alkyle a de 2 à 6 atomes de carbone, avec une viscosité à 25°C allant de 2 à 20 Pa.s.

3. Compositions selon la revendication 1 ou 2 où le monomère aromatique vinylique du composant (a) est le styrène et/ou l'α-méthylstyrène.

4. Compositions selon la revendication 1, 2 ou 3 où le monomère acrylique du composant (a) est choisi parmi l'acrylate de butyle et le méthacrylate de butyle.

5. Compositions selon l'une quelconque des revendications précédentes, où le nitrile éthyléniquement insaturé du composant (a) est l'acrylonitrile.

6. Compositions selon l'une quelconque des revendications précédentes où le polyester d'acide adipique avec un (iso)alkyldiol du composant (b) est le polyester d'acide adipique avec le 1,3-butanediol ayant une viscosité à 20°C allant de 2 à 20 Pa.s.

7. Compositions selon l'une quelconque des revendications précédentes où la différence dans l'indice de réfraction entre la matrice rigide et l'élastomère est inférieure à 0,005.

8. Procédé pour la préparation de compositions polymériques transparentes selon l'une quelconque des revendications de 1 à 7 qui comprend le mélange des deux composants (a) et (b) à l'état fondu et le refroidissement et la granulation subséquents.

9. Utilisation des compositions polymériques selon l'une quelconque des revendications précédentes pour préparer des corps formés transparents.
